# EUROPÄISCHE PATENTSCHRIFT

(11) **EP 0 648 784 B1**
(45) Veröffentlichungstag und Bekanntmachung des Hinweises auf die Patenterteilung: **02.01.1997**
(21) Anmeldenummer: 94115719.0
(22) Anmeldetag: 06.10.1994
(51) Int. Cl.: C08F 8/00, C08C 19/44

(54) **Verfahren zur Herstellung von Telechelen**
Process for the preparation of telechelic polymers
Procédé de préparation de polymères téléchéliques

(30) Priorität: 15.10.1993 DE 4335220
(43) Veröffentlichungstag der Anmeldung: 19.04.1995
(73) Patentinhaber: BASF Aktiengesellschaft, 67063 Ludwigshafen (DE)
(72) Erfinder: Bronstert, Klaus, Dr., D-67316 Carlsberg (DE); Knoll, Konrad, Dr., D-68161 Mannheim (DE)

(56) Entgegenhaltungen:
- EP-A- 0 140 024
- EP-A- 0 434 124
- FR-A- 2 364 931
- GB-A- 1 240 711
- US-A- 4 083 834
- US-A- 5 122 544

## Beschreibung

Telechele sind Polymere, deren Kettenenden funktionale Gruppen, z.B. -OH, -SH, -NH₂ usw. enthalten. Sie können als Bausteine von Reaktionspolymeren wie Polyurethanen, Polyepoxiden, Polyestern usw. dienen, wobei insbesondere an beiden Kettenenden funktionalisierte Polymere Bedeutung haben.

Für die Synthese von Dientelechelen ist das Verfahren der anionischen Polymerisation von z.B. Butadien oder Isopren mit insbesondere bifunktionellen Dilithiuminitiatoren in Kohlenwasserstoffen besonders geeignet. Es liefert lebende Polymere enger Molmassenverteilung und geeigneter Mikrostruktur, da hohe Anteile der Diene in 1,4-Konfiguration eingebaut werden. Auch sind geeignete Initiatoren bekannt (z.B. EP 305909 (1988), EP 363659 (1989) oder EP 405327 (1990)). Durch polymeranaloge Umsetzung mit geeigneten Funktionalisierungsreagentien werden die bifunktionell gewachsenen lebenden Polymeren dann in die Telechele umgewandelt.

Besonders begehrte Telechele sind solche mit endständigen primären oder sekundären Hydroxylgruppen, die nach einem bevorzugten Verfahren (vgl. z.B. US 3786116) durch Umsetzung der lebenden Polymeren mit Epoxiden, z.B. Ethylenoxid oder Propylenoxid, hergestellt werden.

Dabei bilden sich durch die Umwandlung der (weniger polaren) Liorganischen Endgruppen in stark polare Li-Alkoholat-Endgruppen sehr stabile Assoziate der Kettenenden, was zu einem drastischen Viskositätsanstieg bzw. bei Funktionalisierungen, die zu mehr als 40-50 % zu bifunktionellen Spezies führen, zum Gelieren der Reaktionsmasse infolge physikalischer Vernetzung führt. Wegen der hohen Reaktionsgeschwindigkeit setzt die Gelierung fast unmittelbar nach Zugabe der Terminierungsreagens ein, dessen gleichmäßige Einmischung dadurch verhindert wird. Die Folgen sind unvollständige Umsetzung und Qualitätseinbußen der Telechele, evtl. auch das Blockieren des Rührers oder gar Beschädigungen an den Anlagenteilen. Zwar kann man die Terminierung bei niedrigen Konzentrationen realisieren; eine solche Arbeitsweise ist jedoch unökonomisch. Es bestand daher Bedarf an einem Verfahren, das eine Terminierung unter Bildung von polaren Endgruppen ohne diese Behinderungen und bei hoher Polymerkonzentration ermöglicht.

Die Aufgabe, diesen Bedarf zu befriedigen, löst das erfindungsgemäße Verfahren, bei dem das bei der Durchmischung der Reaktionsteilnehmer entstehende Gel mit einem messerartige Schneiden aufweisenden Rührer zerschnitten wird, wobei ein feinteiliges Pulver anfällt, in dem die Reaktion mit kurzen Diffusionswegen abläuft.

Unmittelbarer Erfindungsgegenstand ist daher ein Verfahren zur Herstellung von Telechelen durch Umsetzung vorzugsweise mehrfunktkioneller, durch anionische Polymerisation erhaltener "lebender" Polymerer mit einem funktionalisierenden Mittel unter Rühren mit einem messerartige Schneiden als Rührelemente aufweisenden Rührer, wobei die Rührelemente gegen ihre Bewegungsebene geneigt sind und den vom Reaktionsgemisch eingenommenen Raum im wesentlichen vollständig überstreichen. Nach dem erfindungsgemäßen Verfahren gelingt die Einmischung des Terminierungsreagenzes in kürzester Zeit. Wie üblich setzt zunächst ein starker Viskositätsanstieg ein, der einen entsprechenden Anstieg der Rührerdrehmonomentes zur Folge hat. Durch die messerartigen Schneiden des Rührers wird das entstehende Gel dann überraschenderweise zu einem zunehmend feiner werdenden Pulver zerschnitten, das etwa das 2- bis 3-fache Schüttvolumen der Ausgangslösung besitzt. In diesem Pulverbett wird die Umsetzung unter weiterem Rühren zu Ende geführt, was im allgemeinen nach bis zu 3 Stunden der Fall ist. Dann wird protoniert und, wie in den nachstehenden Beispielen beschrieben, aufgearbeitet.

Vor der Freisetzung des Telechels aus dem Alkoholat sollte der Rührer nicht abgestellt werden, da sonst das Pulver allmählich wieder zu einem Gel zusammenfällt und es dann schwer ist, der Rührer erneut in Betrieb zu nehmen.

Das pulverförmige Reaktionsprodukt erscheint nur bei niedriger Konzentration der Ausgangslösung (z.B. 5-10 %) naßfeucht, bei höherer Konzentration (jedoch immerhin noch 50 bis 70 % Lösungsmittelanteil) dagegen trocken. Mit dem erfindungsgemäßen Verfahren lassen sich noch Ausgangskonzentrationen mit über 30 % Feststoffgehalt vollständig umsetzen.

Die zur Terminierung eingesetzten Lösungen des lebenden Polymeren können homogen oder als Dispersionen in geeigneten Kohlenwasserstoffen vorliegen. Homogene Lösungen sind z.B. die durch Polymerisation von Dienen in aromatischen Kohlenwasserstoffen wie Benzol der Toluol, aber auch in Cyclohexan erhaltenen Gemische. Dispersionen erhält man durch Polymerisation in Kohlenwasserstoffen mit Löslichkeitsparametern < 7,2 entsprechend den Angaben der US 4 083 834, z.B. in i-Butan oder 2,2,4-Trimethylpentan, insbesondere, wenn auch Styrol enthaltende Polymere hergestellt werden.

Für das erfindungsgemäße Verfahren geeignete Polymere mit hohen Gehalten an lebenden bifunktionellen Li-Polymeren lassen sich besonders gut herstellen nach dem in der DE 40 30 400 beschriebenen 2-stufigen Polymerisationsverfahren.

### Beispiel 1

Es wurde ein Initiator verwendet, der durch Dimerisierung von 1 Mol 1-Phenyl-1-(3,4-Dimethylphenyl)-ethylen mit Lithiumgranulat in einer Mischung aus je 3 Mol Diethylether und Ethylbenzol bei unter 35°C gewonnen wurde.

Nach der Umsetzung wurde Ether und Ethylbenzol unterhalb von 30°C abdestilliert, bis der Ethergehalt auf <0,4 Mol je Mol Diphenylethylen abgesunken war und eine Initiator-Konzentration von 1 Mol/l erreicht wurde. Der Katalysator muß unmittelbar nach seiner Herstellung verbraucht werden, da er nach einigen Stunden auszukristallisieren beginnt.

Die Polymerisationsversuche wurden in einem zylindrischen, 6 l fassenden, ummantelten Reaktor mit einer Höhe von 40 und einem Durchmesser von 15 cm ausgeführt. Der Reaktor war mit einem mit 5 mm Wandabstand rotierenden Flügelrührer mit nach Art eines Mixers messerförmig geschliffenen Flügelkanten ausgerüstet (vgl. Figur). Die Flügel waren im Wandbereich mit 30° gegen die Waagrechte für Auftrieb und im Zentrum (60 % des Durchmessers) mit 290° für Abtrieb eingestellt, so daß keine ungerührten Zonen vorhanden waren. Als Antrieb diente ein Druckluftmotor mit hohem Drehmoment. Der Reaktormantel konnte bis -10°C gekühlt und 70°C beheizt werden. Auf dem Reaktor befanden sich kalibrierte Vorratsbehälter für Dien (Butadien, Isopren), Styrol und Cyclohexan. Auf dem Vorratsbehälter für Dien befand sich ein mit Sole beschickter Kühler, über den nicht umgesetztes Butadien aus dem Reaktor in die Vorlage zurückdestilliert werden konnte.

Alle für die Herstellung der Telchele erforderlichen Operationen wurden unter strengen Ausschluß von Sauerstoff und Feuchtigkeit durchgeführt. Der Reaktor wurde vor der Inbetriebnahme mit einer Lösung von Li-Butyl in Hexan ausgekocht. Lösungsmittel, Monomere und Ethylenoxid wurden durch Destillation über Aluminium-trisobutyl gereinigt, das Lösungsmittel außerdem im Vorratsbehälter mit der Katalysatorlösung austitriert, bis eine schwache Orangenfarbe bestehen blieb.

Zur Herstellung der Telechele wurde der Reaktor auf -10°C gekühlt, mit 300 cm³ Butadien bzw. Isopren beschickt und 154 m³ der 1 molaren Katalysatorlösung zugegeben. Nach 40-90 Minuten in der Nähe des Siedepunktes der Monomeren ist die Farbe der Mischung von dunkelbraun auf ein durchsichtiges hellorange bis dunkelgelb zurückgegangen.

Die viskos gewordene Lösung wird nun unter gutem Rühren und Zugabe von Cyclohexan langsam auf 60°C gebracht, wobei bei der Verwendung von Butadien ein Teil des Monomeren in die Vorlage zurückdestilliert. Bei 60°C werden kontinuierlich nach Maßgabe des Verbrauchs das restliche Monomer und soviel Cyclohexan zugegeben, daß eine Lösung mit 30 Gew.-% Polymeranteil entsteht.

Zur Funktionalisierung wird die Polymerlösung bei einer Temperatur unter 40°C mit mindestens 1 Mol Ethylenoxid je Mol Lithium unter intensivem Rühren in ca. 2 sec gemischt. Unmittelbar danach steigt die Viskosität zunächst stark an, dann entsteht ein immer feinteiliger werdendes Pulver, das weitere 3 Stunden gerührt wird.

Zur Aufarbeitung wird dem Pulver etwa 20 % absolutes Methanol, bezogen auf das Volumen der Lösung vor der Terminierung, zugegeben und intensiv gerührt. Nach dem Abstellen des Rührers wird nach vollständiger Phasentrennung die untere Lösungsmittelschicht abgelassen. Nach 1- bis 2-maliger Wiederholung dieser Operation enthält die Lösung weniger 1 ppm Alkali. Destilliertes Wasser, mit dem die Lösung zur Sicherheit ausgeschüttelt wird, reagiert neutral. Nach Zugabe von 0,1 % Stabilisator (Irganox 1076) bezogen auf das Polymere, wird das Cyclohexan im Vakuum abdestilliert. Bei der Terminierung mit Ethylenoxid erhält man wasserklare Telechele.

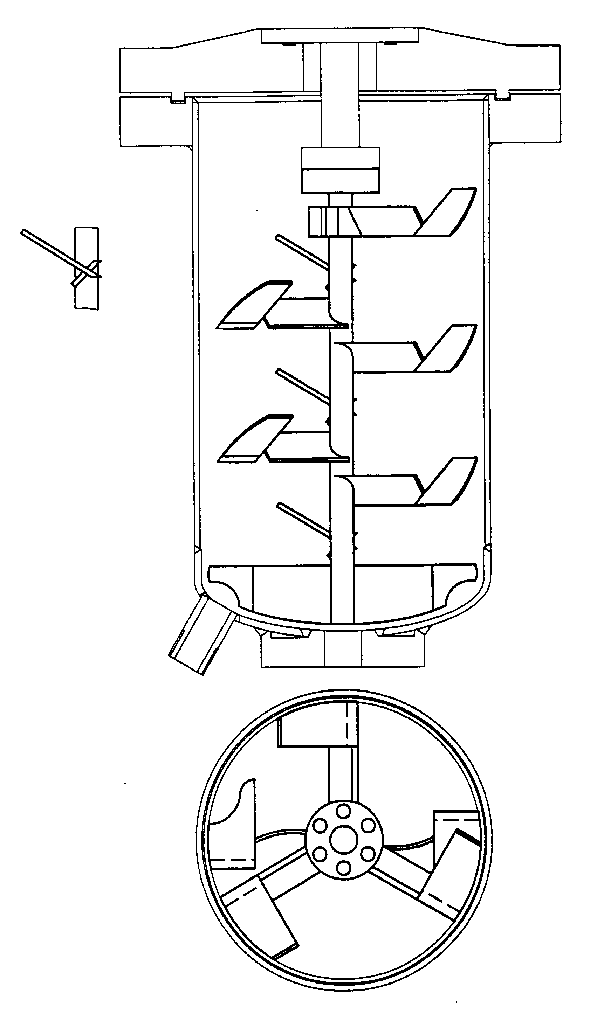

## Patentansprüche

1. Verfahren zur Herstellung von Telechelen durch Umsetzung vorzugsweise mehrfunktioneller, durch anionische Polymerisation erhaltener "lebender" Polymerer mit einem funktionalisierenden Mittel, dadurch gekennzeichnet, daß die Umsetzung unter Rühren mit einem messerartige Schneiden als Rührelemente aufweisenden Rührer vorgenommen wird, wobei die Rührelemente gegen ihre Bewegungsebene geneigt sind und den vom Reaktionsgemisch eingenommenen Raum im wesentlichen vollständig überstreichen.

2. Verfahren nach Anspruch 1, dadurch gekennzeichnet, daß als funktionalisierendes Mittel ein Epoxid verwendet wird.

3. Verfahren nach Anspruch 1, dadurch gekennzeichnet, daß das lebende Polymer Styrol-, Butadien- und/oder Isopren-Einheiten enthält.

## Claims

1. A process for the preparation of a telechele by reacting, preferably, a polyfunctional, living polymer obtained by anionic polymerization with a functionalizing agent, wherein the reaction is carried out while stirring with a stirrer having knife-like blades as stirring elements, the latter being inclined relative to their plane of movement and passing over essentially the complete space occupied by the reaction mixture.

2. A process as claimed in claim 1, wherein an epoxide is used as the functionalizing agent.

3. A process as claimed in claim 1, wherein the living polymer contains styrene, butadiene and/or isoprene units.

## Revendications

1. Procédé pour la préparation de polymères téléchéliques par mise en réaction de préférence polyfonctionnelle de polymères "vivants" obtenus par polymérisation anionique avec un agent de fonctionnalisation, caractérisé en ce que la mise en réaction est réalisée en agitant avec un dispositif présentant des lames en forme de couteaux comme éléments d'agitation, les éléments d'agitation étant inclinés par rapport à leurs plans de mouvement et balayant de manière essentiellement complète l'espace occupé par le mélange réactionnel.

2. Procédé selon la revendication 1, caractérisé en ce que, comme agent de fonctionnalisation, on utilise un époxyde.

3. Procédé selon la revendication 1, caractérisé en ce que le polymère vivant contient des unités de styrène, de butadiène et/ou d'isoprène.
